# EUROPEAN PATENT APPLICATION

(11) **EP 4 482 016 A1**
(43) Date of publication of application: **25.12.2024**
(21) Application number: 22927133.3
(22) Date of filing: 18.02.2022
(51) Int. Cl.: H02P 5/00

(54) **ELECTRONIC CONTROL DEVICE**

(71) Applicant: Hitachi Astemo, Ltd., Ibaraki 312-8503 (JP)
(72) Inventor: SEKIYA Masashi, Hitachinaka-shi, Ibaraki 312-8503 (JP); YAMAMOTO Yusuke, Hitachinaka-shi, Ibaraki 312-8503 (JP)
(74) Representative: Strehl Schübel-Hopf & Partner
(86) International application number: PCT/JP2022/006658
(87) International publication number: WO 2023/157232

(57) **Abstract**

Provided is an electronic control device (110) that drives and controls a plurality of inductive loads and can extend the life of an electronic component by minimizing the total amount of ripple current effective values of the electronic component. The electronic control device (110) includes a control unit (270) that sets drive output values including drive start timings, output duty ratios, and drive frequencies of a plurality of load drivers (160 - 180) that drive a plurality of inductive loads (130 - 150) based on drive state information of the inductive loads (130 - 150), current output units (280, 300, 320) that output current values flowing through the load drivers (160 - 180), and an ON timing setting unit (290) that sets timings to turn on the outputs of drive output values of the load drivers (160 - 180) based on the current values output by the current output units (280, 300, 320). The ON timing setting unit (290) sets the ON timing of each of the load drivers (160 - 180) so as to set timings to cancel out the ripple current effective values generated in an electronic component (120) connected by a power line as a drive source for the plurality of inductive loads (130 - 150).

## Description

### Technical Field

The present invention relates to an electronic control device that drives an inductive load.

### Background Art

In a system configuration in which one control device controls a plurality of inductive loads, it is known that when ON timings of outputs of the plurality of loads coincide with each other, the heat generation increases due to ripple currents, resulting in shortening the life of an electronic component.

As a method of prolonging the life of an electronic component, for example, as disclosed in PTL 1, there is known a method of smoothing ripple currents and suppressing heat generation by shifting the ON timings of outputs of a control device at fixed intervals.

### Citation List

### Patent Literature

PTL 1: JP 9-331696

### Summary of Invention

### Technical Problem

In PTL 1 described above, for a driver subjected to pulse width modulation (PWM) control by a load control device, the ON timing of an output voltage is shifted for each driver to smooth ripple currents flowing through an electronic component and suppress heat generation of the electronic component.

However, in the technique described in PTL 1, a ripple current corresponding to a current flowing through a load is generated in an electronic component at the timing of turning on and off the load. When the number of loads controlled by a driver and the load current increase, an increase of a ripple current increases the heat generation of the electronic component, and the problem of shortening the life of the electronic component cannot be avoided.

Therefore, an object of the present invention is to provide a highly reliable electronic control device that drives and controls a plurality of inductive loads and is capable of prolonging the life of electronic components by minimizing the total amount of effective ripple current values of the electronic components constituting the electronic control device.

### Solution to Problem

In order to achieve the above object, the present invention is configured as follows.

An electronic control device that generates control signals for controlling a plurality of inductive loads includes a control unit configured to set drive output values including drive start timings, output duty ratios, and drive frequencies of a plurality of load drivers configured to drive the plurality of inductive loads based on various types of information related to drive states of the plurality of inductive loads, a current output unit configured to output current values flowing through the plurality of load drivers, and an ON timing setting unit configured to set a timing to turn on outputs of the drive output values in the plurality of load drivers based on the current values output by the current output unit. The ON timing setting unit sets ON timings of the plurality of load drivers so as to cancel out ripple current effective values generated in an electronic component connected by a power supply line as a drive source for the plurality of inductive loads.

### Advantageous Effects of Invention

According to the present invention, in an electronic control device that drives and controls a plurality of inductive loads, it is possible to implement a highly reliable electronic control device capable of suppressing heat generation due to ripple currents in electronic components constituting the electronic control device and a control method thereof.

This makes it possible to extend the life of an electronic component and the life and achieve an increase in the life and an improvement in the reliability of an electronic control device.

Problems, configurations, and effects other than those described above will be clarified by the following description of embodiments.

### Brief Description of Drawings

[FIG. 1] FIG. 1 is a diagram illustrating the basic configuration of an electronic control device according to a first embodiment of the present invention.
[FIG. 2] FIG. 2 is a diagram conceptually illustrating an operation of the electronic control device in FIG. 1.
[FIG. 3] FIG. 3 is a functional block diagram of the electronic control device in FIG. 1.
[FIG. 4] FIG. 4 is a flowchart illustrating a control method for the electronic control device according to the first embodiment of the present invention.
[FIG. 5] FIG. 5 is a timing chart illustrating the control method for the electronic control device according to the first embodiment of the present invention.
[FIG. 6] FIG. 6 is a timing chart illustrating the transient response times of ripple current cancellation according to the first embodiment of the present invention.
[FIG. 7] FIG. 7 is a functional block diagram of an electronic control device according to a second embodiment of the present invention.
[FIG. 8] FIG. 8 is a functional block diagram of an electronic control device according to a third embodiment of the present invention.
[FIG. 9] FIG. 9 is a functional block diagram of an electronic control device according to a fourth embodiment of the present invention.
[FIG. 10] FIG. is a timing chart illustrating a control method for the electronic control device according to the fourth embodiment of the present invention.

### Description of Embodiments

Hereinafter, embodiments of the present invention will be described with reference to the drawings.

In the drawings, the same components are denoted by the same reference numerals, and a detailed description of overlapping components will be omitted.

### Embodiment

### (First Embodiment)

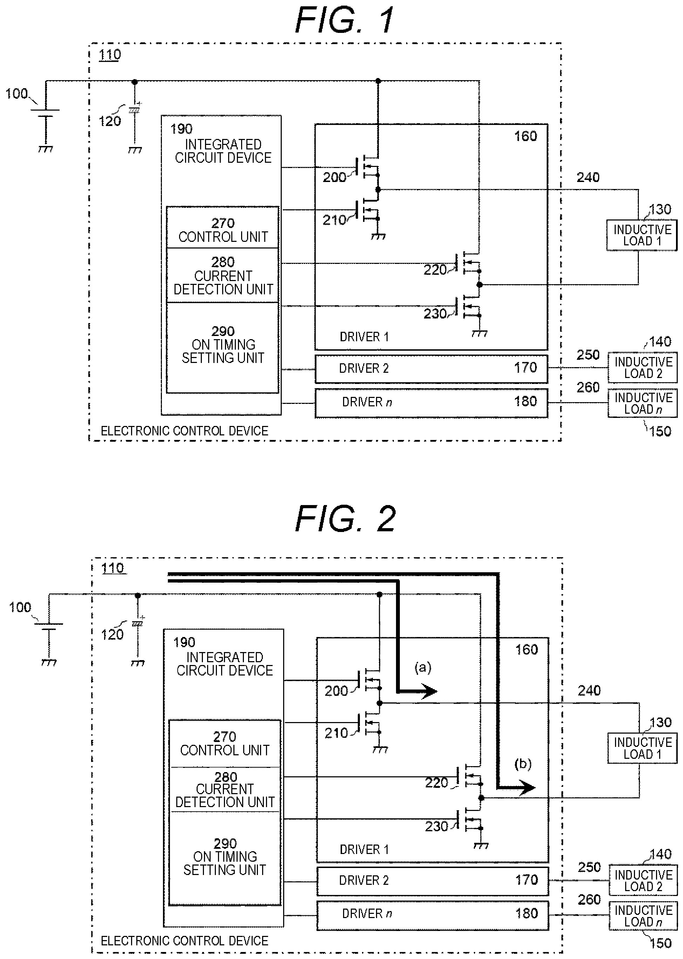

An electronic control device according to a first embodiment of the present invention will be described with reference to FIGS. 1 to 6.

First, the basic configuration and operation of an electronic control device 110 to which the present invention is applied will be described with reference to FIGS. 1 and 2.

As illustrated in FIG. 1, the electronic control device 110 to which the present invention is applied includes, as main components, an electronic component 120 such as an electrolytic capacitor for suppressing current fluctuation on a power supply 100 line, load drivers 160, 170, and 180 for driving a plurality of external inductive loads 130, 140, and 150, and an integrated circuit device 190 such as a microcontroller for controlling the load drivers 160, 170, and 180.

The load drivers 160, 170, 180 include any or all of the switching elements 200, 210, 220, and 230, such as MOS-FETs, for driving the external inductive loads 130, 140, and 150, such as electric motors.

The integrated circuit device 190 includes, in addition to various calculations necessary for the operation of the electronic control device 110, a control unit 270 that sets load drive information from the drive states of the external inductive loads 130, 140, and 150 connected to the electronic control device 110, a current detection unit 280 that detects the output current values of the load drivers 160, 170, and 180, and an ON timing setting unit 290 that sets timings to turn on the outputs of the drive output values in the load drivers 160, 170, and 180 based on the output current values detected by the current detection unit 280.

The operation of the electronic control device 110 in FIG. 1 will be described with reference to FIG. 2.

The PWM waveforms generated by the integrated circuit device 190 are input to the load drivers 160, 170, and 180. The switching elements included in the load drivers 160, 170, and 180 start ON/OFF operations based on the input PWM waveforms. By switching ON/OFF of the switching elements, output voltages 240, 250, and 260 of the load drivers 160, 170, and 180 are changed to drive the external inductive loads 130, 140, and 150.

For example, when the switching elements 200 and 230 are ON and the switching elements 210 and 220 are OFF, a current (a) flows from the power supply 100 toward the external inductive load 130, and the external inductive load 130 performs forward rotation operation. In contrast, when the switching elements 200 and 230 are OFF and the switching elements 210 and 220 are ON, a current (b) flows from the power supply 100 toward the external inductive load 130, and the external inductive load 130 performs backward rotation operation.

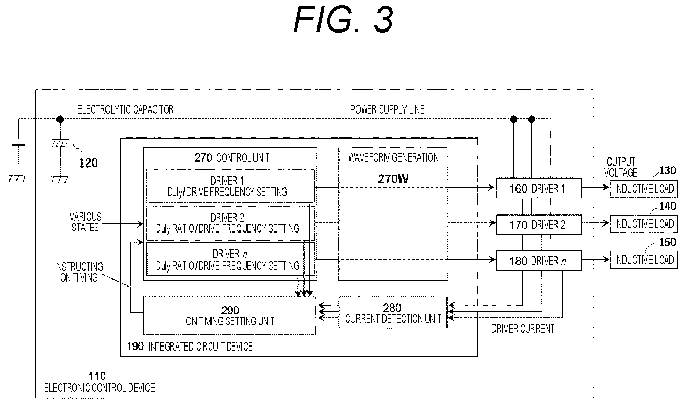

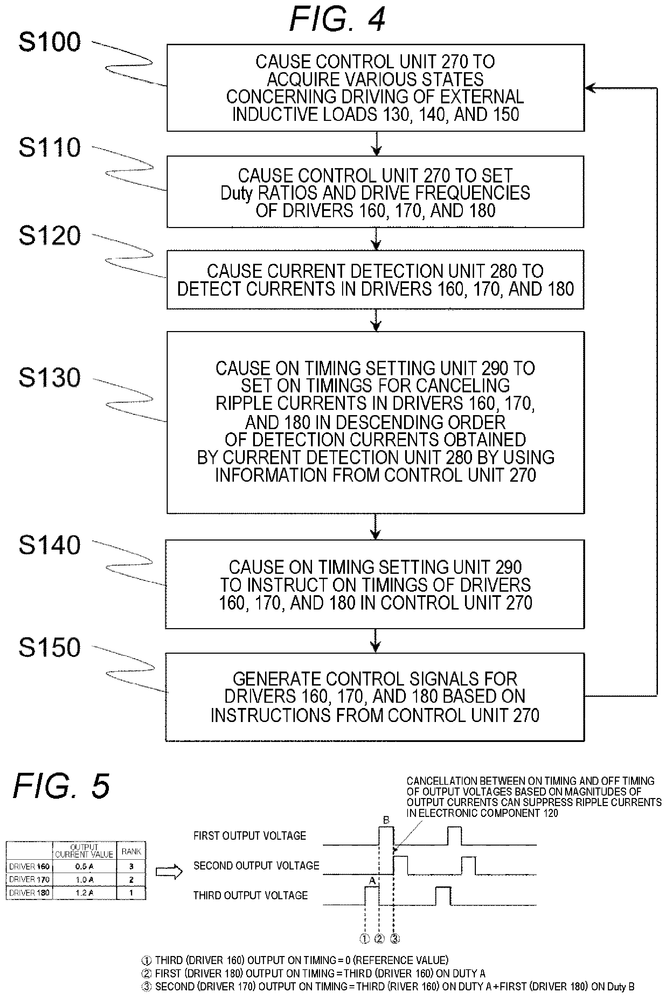

Next, the functions of the respective units of the electronic control device 110 in FIG. 1 and a control method by the electronic control device 110 will be described with reference to FIGS. 3 and 4.

The control unit 270 in the integrated circuit device 190 sets load drive information such as the drive start timings, the PWM drive cycles, and the duty ratios of the load drivers 160, 170, and 180 based on various states related to the driving of the external inductive loads 130, 140, and 150 connected to the electronic control device 110.

The current detection unit 280 detects output currents flowing through the load drivers 160, 170, and 180. As a method of detecting output currents is configured to acquire, for example, peak values during a certain period in which the external inductive loads 130, 140, and 150 are driven.

Note that the method of detecting output currents according to the present invention is not limited to the acquisition of peak values in a certain period in which the external inductive loads 130, 140, and 150 are driven, and the same effect as those of the present invention can be obtained even when the method is applied to the electronic control device 110 having a similar program configuration for detecting the output currents of the load drivers 160, 170, and 180, such as the acquisition of average values in a certain period.

The ON timing setting unit 290 sets the ON timings so as to cancel out ripple currents in the load drivers 160, 170, and 180 when the detected currents of the current detection unit 280 are large based on the load drive information set by the control unit 270 using the method in FIG. 5 to be described later. The ON timing setting unit 290 corrects the load drive information of the control unit 270 based on the ON timing set for each of the load drivers 160, 170, and 180.

The integrated circuit device 190 generates control signals to the load drivers 160, 170, and 180 based on the corrected load drive information.

FIG. 3 is a functional block diagram of the electronic control device 110. Referring to FIG. 3, the integrated circuit device 190 includes a waveform generating unit 270W that generates a PWM waveform signal on the basis of a drive output value from the control unit 270 and a set value of the ON timing setting unit 290. The control unit 270 performs waveform forming processing by the waveform generating unit 270W and sets load drive information such as the drive start timings of the load drivers 160, 170, and 180, PWM drive cycles, and duty ratios based on various states related to the driving of the external inductive loads 130, 140, and 150 connected to the electronic control device 110. The current detection unit 280 detects output currents flowing through the load drivers 160, 170, and 180. On the basis of the load drive information set by the control unit 270, the ON timing setting unit 290 sets ON timings so as to cancel ripple currents in the load drivers 160, 170, and 180 when the detected currents of the current detection units 280 are large.

The above control method is illustrated in the flowchart of FIG. 4.

First, in step S100 in FIG. 4, the control unit 270 acquires various states regarding the driving of the external inductive loads 130, 140, and 150 connected to the electronic control device 110.

Next, in step S110, the control unit 270 sets load drive information such as the drive start timings, the PWM drive cycles, and the duty ratios of the load drivers 160, 170, and 180 on the basis of the various states acquired in step S100.

Subsequently, in step S120, the current detection unit 280 detects output currents flowing through the load drivers 160, 170, and 180.

The process then shifts to step S130, in which on the basis of the load drive information set by the control unit 270, the ON timing setting unit 290 sets ON timings so as to cancel out ripple currents in the load drivers 160, 170, and 180 when the detected currents of the current detection units 280 are large.

Next, in step S140, the ON timing setting unit 290 corrects the load drive information of the control unit 270 based on the ON timing set for each of the load drivers 160, 170, and 180.

Finally, in step S150, the integrated circuit device 190 generates control signals to the load drivers 160, 170, and 180 based on the load drive information corrected by the control unit 270 and ends the processing.

A method of setting the ON timings of the load drivers 160, 170, and 180 based on the load drive information set by the control unit 270 and the detected currents of the current detection unit 280 will be described with reference to FIG. 5, taking a case where there are three external inductive loads as an example. FIG. 5 is an explanatory diagram of a control method for the electronic control device according to the first embodiment of the present invention.

The current detection unit 280 detects output currents flowing through the load drivers 160, 170, and 180 and then transmits the detected currents to the ON timing setting unit 290. As illustrated in the table in FIG. 5, the ON timing setting unit 290 ranks the load drivers 160, 170, and 180 in descending order of the output currents.

In accordance with the result of the ranking, the ON timing setting unit 290 sets the ON timings of the load drivers 160, 170, and 180 so as to cancel out the ripple current effective values generated in the electrolytic capacitor 120 such as an electronic component connected by a power supply line as a drive source for the loads.

For example, as illustrated in FIG. 5, based on the output voltage of the load driver 160 having the third output current value, the ON timing of the first output voltage is set such that the ON/OFF timing of the output voltage of the load driver 180 having the first output current value coincides with the ON/OFF timing of the output voltage of the load driver 160 having the third output current value. Then, the ON timing of the first output voltage is set such that the ON/OFF timings of the first output voltage and the second output voltage coincide with each other.

The ON timings of the output voltages set by circles 1 to 3 in FIG. 5 can be expressed as follows.
(1) It is assumed that output ON timing of third place (load driver 160) - 0 (reference value).
(2) It is assumed that output ON timing of first place (load driver 180) = ON Duty A of third place (load driver 160) .
(3) It is assumed that output ON timing of second place (load driver 170) = ON Duty A of third place (load driver 160) + ON Duty B of first place (load driver 180).

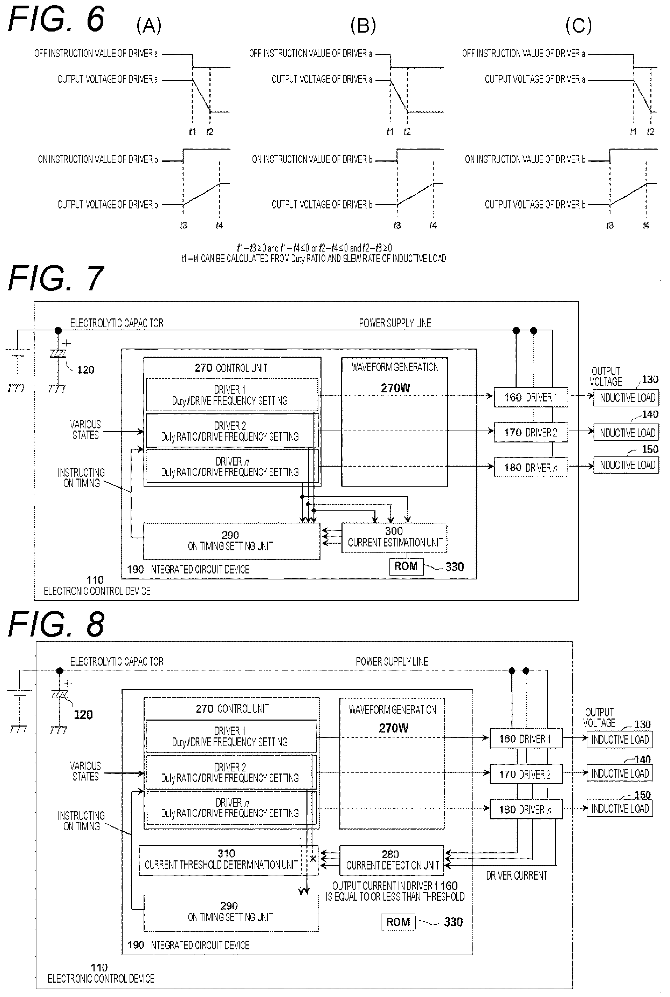

Note that the method for ripple current cancellation according to the present invention is not limited to (1) to (3) described above and may be based on the relationship illustrated in FIG. 6. That is, as illustrated in FIG. 6, in the relationship between a certain driver a and a certain driver b, the range in which transient response times t1 and t2 corresponding to the rising or falling instruction value of the output voltage of the driver a and transient response times t3 and t4 corresponding to the falling or rising instruction value of the output voltage of the driver b overlap may satisfy t1 - t3 ≥ 0 and t1 - t4 ≤ 0 illustrated in (A) and (C) or t2 - t4 ≤ 0 and t2 - t3 ≥ 0 illustrated in (B). If such a relationship is satisfied, the same effect as that of the present invention can be obtained even when the above method is applied to an electronic control device having a similar program configuration that cancels out ripple currents with respect to the output voltages of the load drivers 160, 170, and 180.

Note that the difference between the example illustrated in (A) and the example illustrated in (C) is the magnitude relationship between transient response times t2 and t4.

As described above, the electronic control device 110 according to the first embodiment includes the plurality of load drive circuits (the load drivers 160, 170, and 180), the integrated circuit device 190 that transmits control signals to the plurality of load drive circuits (the load drivers 160, 170, and 180), the control unit 270 that sets drive output values including drive start timings, output duty ratios, and drive frequencies of the load drive circuits (the load drivers 160, 170, and 180) on the basis of various types of information regarding the drive states of the plurality of loads (130, 140, and 150), the current detection unit 280 that detects the output current values of the plurality of load drive circuits (the load drivers 160, 170, and 180), and the ON timing setting unit 290 that sets timings to turn on the outputs of the drive output values in the plurality of load drive circuits (the load drivers 160, 170, and 180) on the basis of the output current values detected by the current detection unit.

Then, the ON timing setting unit 290 sets the ON timings of the plurality of load drive circuits (130, 140, and 150) so as to cancel out the ripple current effective values generated in the electronic component 120 such as the electrolytic capacitor connected by the power supply line as a drive source for the plurality of loads (the load drivers 160, 170, and 180).

According to the electronic control device 110 of the first embodiment, by matching the ON/OFF timings of the output voltages 240, 250, and 260 of the load drivers 160, 170, and 180 depending on the magnitudes of the output currents, it is possible to cancel out ripple currents in the electronic component 120 such as an electrolytic capacitor and suppress heat generation, thereby implementing a highly reliable electronic control device. In the first embodiment, the order of the ON timings of the load drivers 160, 170, and 180 can be set in the descending order of the current values of the load drivers 160, 170, and 180.

### (Second embodiment)

An electronic control device 110 according to a second embodiment of the present invention will be described with reference to FIG. 7.

FIG. 7 is a functional block diagram of the electronic control device 110 according to the second embodiment, which corresponds to a modification of the first embodiment (FIG. 3) .

In the first embodiment, as illustrated in FIG. 3, the control unit 270 sets load drive information such as the drive start timings, the PWM drive cycles, and the duty ratios of the load drivers 160, 170, and 180 based on various states related to the drive of the external inductive loads 130, 140, and 150 connected to the electronic control device 110. The current detection unit 280 then detects output currents flowing through the load drivers 160, 170, and 180. Further, the ON timing setting unit 290 is configured to set ON timings so as to cancel out the ripple currents of the load drivers 160, 170, and 180 when the detected currents of the current detection units 280 are large based on the load drive information set by the control unit 270.

In contrast to this, the second embodiment illustrated in FIG. 7 is an embodiment configured to include a current estimation unit 300 that estimates the output currents of load drivers 160, 170, and 180 on the basis of information such as the duty ratios and the load constants of external inductive loads 130, 140, and 150 instead of causing the current detection unit 280 to detect output currents flowing through the load drivers 160, 170, and 180.

As illustrated in FIG. 7, in the electronic control device 110 according to the second embodiment, an integrated circuit device 190 includes the current estimation unit 300 that estimates output currents of the load drivers 160, 170, and 180 from duty ratio information of the external inductive loads 130, 140, and 150 and load constant information including inductances and resistances. The duty ratio information of the external inductive loads 130, 140, and 150 and the load constant information including inductances and resistances are stored in, for example, a storage element such as a ROM 330 of the integrated circuit device 190.

An ON timing setting unit 290 sets ON timings in the load drivers 160, 170, and 180 based on the output currents estimated by the current estimation unit 300. Other configurations are similar to those in FIG. 3, and detailed description thereof will be omitted.

As described above, according to the electronic control device 110 of the second embodiment, the current estimation unit 300 estimates output currents instead of causing the current detection unit 280 to detect output currents flowing through the load drivers 160, 170, and 180 as in the first embodiment.

As a result, the second embodiment can obtain an effect similar to that of the first embodiment and has an effect of lowering the processing load required for the integrated circuit device 190 and increasing the processing speed as compared with the first embodiment.

### (Third embodiment)

An electronic control device 110 according to a third embodiment of the present invention will be described with reference to FIG. 8.

FIG. 8 is a functional block diagram of the electronic control device 110 according to the third embodiment, which corresponds to a modification of the first embodiment (FIG. 3) .

In the third embodiment (FIG. 8), when an ON timing setting unit 290 sets ON timings in load drivers 160, 170, and 180 based on the output currents estimated by a current detection unit 280, a threshold for output currents is set, and a driver through which a current equal to or less than the set threshold flows is excluded from the ON timing setting targets. Other configurations are similar to those of the first embodiment (FIG. 3) and the second embodiment (FIG. 7).

As illustrated in FIG. 8, in the electronic control device 110 according to the present embodiment, an integrated circuit device 190 includes a current threshold determination unit 310 that determines whether output currents flowing through the load drivers 160, 170, and 180 exceed a set threshold.

A set threshold is determined from, for example, the duty ratios and the load constant information of external inductive loads 130, 140, and 150 as described in the second embodiment and is stored in, for example, a storage element such as a ROM 330 in an integrated circuit device 190.

In the third embodiment illustrated in FIG. 8, since the driver current of driver 1 (160) is equal to or less than the threshold, the current threshold value comparison unit 310 excludes driver 1 (160) from the ON timing setting targets of the ON timing setting unit 290. Other configurations are similar to those of the first embodiment illustrated in FIG. 3, and a detailed description thereof will be omitted.

As described above, the electronic control device 110 according to the third embodiment is configured to exclude any of the load drivers 160, 170, and 180 whose output current is equal to or less than a set threshold value from the ON timing setting targets of the ON timing setting unit 290. This makes it possible to obtain the same effects as those of the first embodiment. In addition, as compared with the first embodiment, it is possible to reduce the processing load necessary for the integrated circuit device 190 and suppress the influence of shifting the ON timings of the external inductive loads 130, 140, and 150 on the control.

### (Fourth embodiment)

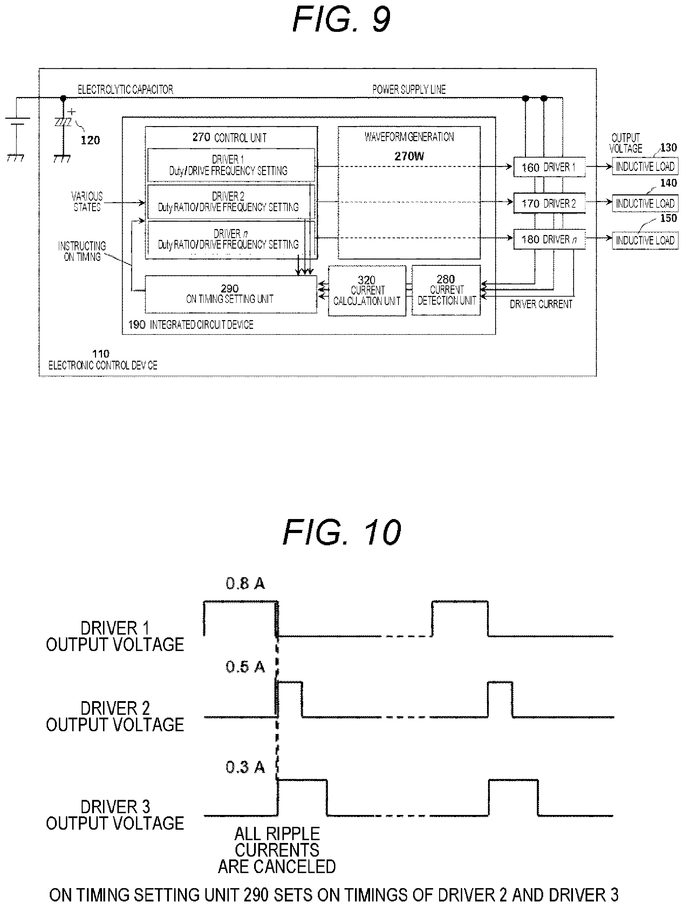

An electronic control device 110 according to a fourth embodiment of the present invention will be described with reference to FIGS. 9 and 10. FIG. 9 is a functional block diagram of the electronic control device 110 according to the fourth embodiment, which corresponds to a modification of the first embodiment (FIG. 3).

FIG. 10 is a timing chart of the operation of the fourth embodiment in a case where, for example, there are three external inductive loads.

As illustrated in FIG. 9, in the electronic control device 110 according to the fourth embodiment, an ON timing setting unit 290 sets ON timings for canceling out ripple currents, including a combination of ON timings upon addition/subtraction of the driver currents detected by a current detection unit 280. Other configurations are similar to those of the first embodiment (FIG. 3), the second embodiment (FIG. 7), and the third embodiment (FIG. 8).

As illustrated in FIG. 9, in the electronic control device 110 according to the present embodiment, the integrated circuit device 190 includes a current calculation unit 320 that adds/subtracts output currents flowing through the load drivers 160, 170, and 180.

FIG. 10 is a timing chart illustrating a control method for the electronic control device 110 according to the fourth embodiment of the present invention.

The example illustrated in FIG. 10 is an example in a case where the current values detected by the current detection unit 280 are as follows. That is, the detected current of the load driver 160 is 0.8 A, the detected current of the load driver 170 is 0.5 A, and the detected current of the load driver 180 is 0.3 A. Then, the current calculation unit 320 performs the following calculation. That is, with reference to the load driver 160 having the highest current value, the current value 0.5 A of the load driver 170 and the current value 0.3 A of the load driver 180 are added to obtain 0.8 A. The current value 0.3 A of the load driver 170 having the lowest current value is subtracted from the current value 0.5 A of the load driver 180 having the next highest current value to obtain 0.2 A.

From the calculation result obtained by the current calculation unit 320, 0.8 A obtained by adding the current value 0.5 A of the load driver 170 and the current value 0.3 A of the load driver 180 is the current value 0.8 A of the load driver 160. Therefore, as illustrated in FIG. 10, it is possible to cancel out all the ripple currents in the load driver 160 by raising the output voltage of the load driver 170 and the output voltage of the load driver 180 at the time of falling of the output voltage of the load driver 160.

As in the example illustrated in FIG. 10, when all the ripple currents in the load driver 160 cannot be canceled out, based on the result of subtraction between the current value of the load driver 170 other than the load driver 160 having the highest current value and the current value of the load driver 180, the rises and falls of the output voltage of the load driver 160, the output voltage of the load driver 170, and the output voltage of the load driver 180 for suppressing the ripple currents are set.

As described with reference to FIG. 10, the ON timing setting unit 290 sets a combination of the ON timings capable of canceling out ripple currents on the basis of the result of addition/subtraction of output currents flowing through the load drivers 160, 170, and 180 by the current calculation unit 320.

As described above, according to the electronic control device 110 of the fourth embodiment, the ON timing setting unit 290 sets the ON timings of the load drivers 160, 170, and 180 on the basis of the result of current addition/subtraction by the current calculation unit 320, whereby a high cancellation effect of ripple currents can be obtained even when a load having a large ripple current is used.

The current detection unit 280 in the first and third embodiments and the current estimation unit 300 in the second embodiment can be collectively referred to as current output units that outputs current values flowing through the load drivers 160, 170, and 180. In addition, the current detection unit 280 and the current calculation unit 320 in the fourth embodiment can also be collectively referred to as current output units that output current values flowing through the load drivers 160, 170, and 180.

Note that, although the electronic control device 110 is described in the first to fourth embodiments, the present invention can obtain the same effect as that of the present invention when applied to an electronic control device having a similar circuit configuration for driving loads even in all applications such as in-vehicle applications, home appliance applications, and medical applications.

In addition, the present invention is not limited to the above-described embodiments and includes various modifications. For example, the above-described embodiments have been described in detail for easy understanding of the present invention and are not necessarily limited to those having all the described configurations.

In addition, a part of the configuration of a certain embodiment can be replaced with a configuration of another embodiment, and the configuration of another embodiment can be added to the configuration of a certain embodiment. In addition, it is possible to add, delete, and replace other configurations with respect to a part of the configuration of each embodiment.

### Reference Signs List

- 100: power supply
- 110: electronic control device
- 120: electronic component (electrolytic capacitor)
- 130: external inductive load 1
- 140: external inductive load 2
- 150: external inductive load n
- 160: driver 1
- 170: driver 2
- 180: driver n
- 190: integrated circuit device (microcontroller)
- 200: switching element 1
- 210: switching element 2
- 220: switching element 3
- 230: switching element 4
- 240: output voltage 1 of driver
- 250: output voltage 2 of driver
- 260: output voltage n of driver
- 270: control unit
- 270W: waveform generating unit
- 280: current detection unit
- 290: ON timing setting unit
- 300: current estimation unit
- 310: current threshold determination unit
- 320: current calculation unit
- 330: ROM

## Claims

1. An electronic control device that generates control signals for controlling a plurality of inductive loads, **characterized by** comprising:
a control unit configured to set drive output values including drive start timings, output duty ratios, and drive frequencies of a plurality of load drivers configured to drive the plurality of inductive loads based on various types of information related to drive states of the plurality of inductive loads;
a current output unit configured to output current values flowing through the plurality of load drivers; and
an ON timing setting unit configured to set a timing to turn on outputs of the drive output values in the plurality of load drivers based on the current values output by the current output unit,
wherein the ON timing setting unit sets ON timings of the plurality of load drivers so as to cancel out ripple current effective values generated in an electronic component connected by a power supply line as a drive source for the plurality of inductive loads.

2. The electronic control device according to claim 1, **characterized in that** the ON timing setting unit sets an ON timing of each of the plurality of load drivers so as to minimize a total amount of the ripple current effective values.

3. The electronic control device according to claim 1, **characterized in that** the current output unit is a current detection unit configured to detect an output current value of each of the plurality of load drivers, and the ON timing setting unit ranks an ON timing of each of the plurality of load drivers in descending order of current values of the plurality of load drivers detected by the current detection unit.

4. The electronic control device according to claim 3, **characterized in that** the ON timing setting unit sets the ON timing based on the output duty ratio and the drive frequency of each of the plurality of load drivers which are generated by the control unit.

5. The electronic control device according to claim 4, **characterized in that** the plurality of inductive loads have at least a first inductive load and a second inductive load, and the ON timing setting unit cancels out the ripple current effective values with respect to a total amount of the ripple current effective values by combining a rising or falling timing of a current in the first inductive load among the plurality of inductive loads and a falling or rising timing of a current in the second inductive load different from the first inductive load.

6. The electronic control device according to claim 5, **characterized in that** the ON timing setting unit cancels out ripple currents by overlapping a transient response time of a rising or falling timing of a current in the first inductive load and a transient response time of a falling or rising timing of a current in the second inductive load which is different from the first inductive load.

7. The electronic control device according to claim 1, **characterized in that** the current output unit is a current estimation unit configured to estimate output currents of the plurality of load drivers based on information including the output duty ratio and a load constant of each of the plurality of inductive loads, and the ON timing setting unit sets ON timings based on estimation results obtained by the current estimation unit.

8. The electronic control device according to claim 1, **characterized in that** the inductive load is an electric motor, and the electronic control device further comprises a waveform generating unit configured to generate a PWM waveform signal based on the drive output value and a set value of the ON timing setting unit.

9. The electronic control device according to claim 1, **characterized by** further comprising a current threshold determination unit configured to compare a current value flowing through each of the plurality of load drivers that drive the plurality of inductive loads with a predetermined threshold,
wherein the load driver in which the current threshold determination unit determines that a current not more than the predetermined threshold flows is excluded from ON timing setting targets of the ON timing setting unit.

10. The electronic control device according to claim 3, **characterized by** further comprising a current calculation unit configured to add/subtract output currents flowing through the plurality of load drivers,
wherein the ON timing setting unit sets a combination of ON timings capable of canceling out ripple current effective values based on a result obtained by adding/subtracting the output currents flowing through the load drivers by the current calculation unit.
